Europäisches Patentamt

European Patent Office

Office européen des brevets

(19)

(11) Veröffentlichungsnummer: **0 105 829**
**A1**

(12) ## EUROPÄISCHE PATENTANMELDUNG

(21) Anmeldenummer: 83630166.3

(22) Anmeldetag: 05.10.83

(51) Int. Cl.³: **F 16 B 2/04**
**F 16 B 13/12, E 21 D 20/00**
**E 21 D 21/00**

(30) Priorität: 06.10.82 LU 84408

(43) Veröffentlichungstag der Anmeldung:
18.04.84 Patentblatt 84/16

(84) Benannte Vertragsstaaten:
AT BE CH DE FR GB IT LI NL SE

(71) Anmelder: ARBED S.A.
Avenue de la Liberté 19
L-2930 Luxembourg(LU)

(72) Erfinder: Grisse, André
75 rue de Lasauvage
L-4607 Differdange(LU)

(74) Vertreter: Leitz, Paul et al,
Administration Centrale de l'ARBED Case Postale 1802
L-2930 Luxembourg(LU)

(54) Befestigungsvorrichtung.

(57) Die Befestigungsvorrichtung besteht in ihrem grundsätzlichen Aufbau aus einer Schraube (1), einem metallenen
Drahtgeflecht (5) und einer Ringmutter (4). Die Schraube (1)
ist auf etwa dem unteren Drittel ihrer Länge mit einem
Gewinde (8) versehen. Sie besitzt einen Sechskant-Kopf (7),
an dessen Bund (2) sich ein Ring (3), mit L-förmigem
Querschnitt lehnt. Bei Schrauben deren Köpfe keinen Bund
besitzen, empfiehlt sich die Verwendung von Unterlegscheiben welche dann die Lage des Bundes (2) einnehmen. Der
Querschnitt der Ringmutter (4) ähnelt dem des Ringes (3). An
diesem Ring (3) respektiv der Mutter (4) stützt sich das
Drahtgeflecht (5) ab, dessen beide Enden mit Kappen (6)
eingefasst sind. Bei Drehung der Schraube (1) bewegt sich
die Ringmutter (4) auf dessen Kopf (7) hin und drückt das
Drahtgeflecht zusammen. Die Kappen (6) folgen hierbei der
Bewegung des Geflechtes und erlauben ein Anlehnen desselben an die Wand (10) auf grösstmöglicher Länge.

FIG. 2

Befestigungsvorrichtung

Die Erfindung bezieht sich auf eine Befestigungsvorrichtung zur Verankerung von Haken, Oesen usw. in Wänden oder Decken sowie zur verschiebungssicheren Bindung von Bauteilen. Solche Vorrichtungen finden insbesondere Verwendung im Bergbau und im Bauwesen.

Es sind Verankerungsvorrichtungen bekannt, welche vornehmlich aus mehreren seitlichen, länglichen segmentförmigen Elementen bestehen die um eine mittige Schraube angeordnet sind. Nachdem ein Loch von den gewünschten Abmessungen in die Wand oder Decke gebohrt worden ist, wird das sogenannte Dübel in die Oeffnung eingeführt. Die feste Verankerung des Dübels im Loch wird durch Drehbewegung der Schraube hervorgerufen. Hierbei kann die Schraube unmittelbar auf die segmentförmigen Elemente wirken, welche sich seitlich auseinanderspreitzen. In einer anderen Ausführungsform wirkt die Schraube auf eine konische Schraubenmutter. Die Verschiebung der Schraubenmutter ruft eine Spreitzung der seitlichen Elemente hervor. Bei einer solchen Vorrichtung, wo die Verankerung durch Kantenpressung zustande kommt, werden die aufzunehmenden Kräfte ungleichmässig im Loch verteilt. Dies ist besonders nachteilhaft bei relativ dünnen Wänden, sowie bei Wänden von ungleichmässiger Zusammenstellung. Hinzu kommt, dass bei Herausdrehen der Schraube, die segmentförmigen Elemente ihre ursprüngliche Lage nicht mehr einnehmen, so dass ein Wiederverwenden dieser Dübel sich nicht anbietet.

Verschiebungssichere Bindungen von Bauteilen, insbesondere Holzplatten werden normalerweise durch zylinderförmige Stifte bewerkstelligt, welche in entsprechende Vertiefungen in Platten eingebracht werden. Nachteilig ist, dass kaum ein Möglichkeit besteht die Kraft der Verbindung einzustellen. Eine Verwendung von Klebstoff macht ein späteres Lösen der Platten unmöglich.

Es ist Aufgabe der Erfindung eine Befestigungsvorrichtung vorzuschlagen, welche sowohl zur Verankerung als auch zur verschiebungssicheren Bindung von Bauteilen Verwendung finden kann. Die Vorrichtung soll darüber hinaus einen möglichst gleichmässigen Druck ausüben können, sowie zur Wiederverwendung geeignet sein.

Dieses Ziel wird erreicht durch die erfindungsgemässe Vorrichtung, bei der zwischen dem Schraubenkopf und der Schraubenmutter Drähte angeordnet sind. Weitere vorteilhafte Ausgestaltungen der Erfindung sind in den Unteransprüchen wiedergegeben.

Die durch die Erfindung erreichbaren Vorteile sind im wesentlichen darin zu sehen, dass die Vorrichtung einfach und robust in der Verwendung sowie billig in der Herstellung ist. Darüber hinaus besteht die Möglichkeit einer Wiederverwendung. Die Vorrichtung übt keinen übermässigen Druck auf beschränkte Teile des Loches aus und besitzt Anpassungseigenschaften bei veränderlichem Querschnitt des Loches. Der Reibungskoeffizient ist sehr hoch und kann durch Beschichtung der Drähte oder eventuell durch Verwendung von einigen Spezialdrähten im Geflecht abgeändert werden. Die Beschichtung der Drähte hat darüber hinaus, in Abhängigkeit von der Dicke der Schicht und der Art des verwendeten Materials eine dämpfende Wirkung, welche beibeispielsweise bei Motorenverankerungen vorteilhaft ist.

Im folgenden wird die Erfindung anhand von einer lediglich einen Ausführungsweg darstellenden Zeichnung näher erläutert. Es zeigt:

- Figur 1 einen Schnitt durch die erfindungsgemässe Befestigungsvorrichtung vor dem Einbau.

- Figur 2 einen Schnitt durch die erfindungsgemässe Befestigungsvorrichtung in eingebautem Zustand.

In den Figuren ist eine Befestigungsvorrichtung dargestellt welche in ihrem grundsätzlichen Aufbau aus einer Schraube 1, einem metallenen Drahtgeflecht 5 und einer Ringmutter 4 besteht. Die Schraube 1 ist auf etwa dem unteren Drittel ihrer Länge mit einem Gewinde 8 versehen. Sie besitzt in dieser Ausführungsform lediglich einen Sechskant-Kopf 7, an dessen Bund 2 sich ein Ring 3, mit L-förmigem Querschnitt lehnt. Bei Schrauben deren Köpfe keinen Bund besitzen, empfiehlt sich die Verwendung von Unterlegscheiben welche dann die Lage des Bundes 2 einnehmen. Der Querschnitt der Ringmutter 4 ähnelt dem des Ringes 3. An dem Ring 3 respektiv der Mutter 4 stützt sich das Drahtgeflecht 5 ab, dessen beide Enden mit Kappen 6 eingefasst sind.

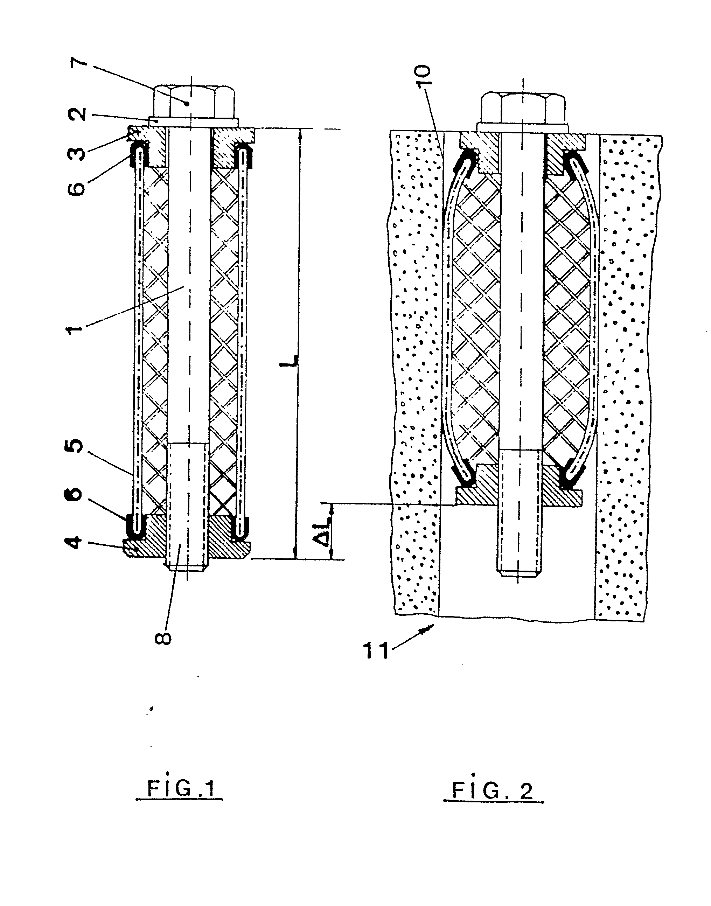

Bei Drehung der Schraube 1 bewegt sich die Ringmutter 4 auf dessen Kopf 7 hin und drückt das Drahtgeflecht zusammen. Erfahrungsgemäss verformt das Geflecht resp. schlauchförmige Haut sich nach aussen hin und lehnt sich an die Wand 10 des Loches 11 an (siehe Fig. 2). Die Kappen 6 folgen hierbei der Bewegung des Geflechtes und erlauben ein Anlehnen desselben an die Wand 10 auf grösstmöglicher Länge.

Bei überhöhter Zug-Beanspruchung wird die Vorrichtung aus dem Loch gezogen, ohne grösseren Schaden an diesem hervorzurufen. Folglich bietet sich die Verwendung der erfindungsgemässen Befestigungsvorrichtung auch als wiederverwendbares Sicherheitselement an, das bei vorher bestimmbarer Zug-Kraft nachgibt. Nach routinemässigen Eichungsmassnahmen ergab beispielsweise eine in ein Rohr von 2,5 cm Durchmesser eingebaute 9 cm lange Befestingungsvorrichtung ein einstellbares Sicherheitselement welches Zugkräften bis 50 kg standhielt.

Die in den Zeichnungen dargestellte Vorrichtung empfiehlt sich besonders zum Verbinden von zwei Platten wobei man zwischen den beiden Platten eventuell einen coaxial zur Vorrichtung angeordneten Distanzring vorsehen kann, dessen Innendurchmesser leicht grösser ist als der Aussendurchmesser der Ringmutter 4. Auf diese Weise ist eine vorübergehende oder definitive Verbindung, mit eventuell genau einstellbarem Abstand, von zwei Platten gewährleistet.

Das Drahtgeflecht, das auf den Zeichnungen einzelgewebt ist, kann auch doppelgewebt sein. Ausserdem besteht die Möglichkeit zwei ineinandergeschachtelte Drahtgeflechte zu verwenden. Die Kappen 6 sind vorteilhafterweise als U-förmige Befestigungsringe oder Ring-Teile ausgebildet; man kann auch die Geflechtsenden in eine Polymermasse einbetten.

Versuche ergaben, dass man einen Durchmesser des Drahtgeflechts von 0,8 cm nur schwer unterschreiten kann. Will man eine Vorrichtung haben die bei kleineren Diametern des Bohrloches verwendet werden kann, muss das Drahtgeflecht durch Drahtstifte ersetzt werden. Die Stifte sind dabei parallel zur Schraubenachse angeordnet und an beiden Enden mit U-förmigen Befestigungsringen verpresst. Es empfiehlt sich in diesem Fall, die Stifte derart mit den Ringen zu verpressen, dass sie auch im Ruhezustand leicht konvex relativ zur Schraubenachse gewölbt sind.

Patentansprüche

1. Befestigungsvorrichtung zur Verankerung sowie zur verschiebungssicheren Verbindung von Bauteilen, welche eine Schraube und eine Ringmutter begreift, dadurch gekennzeichnet, dass sich zwischen dem Schraubenkopf und der Ringmutter vorwiegend konzentrisch um die Schraubenachse angeordnete Drähte befinden.

2. Befestigungsvorrichtung gemäss Anspruch 1, dadurch gekennzeichnet, dass die Drähte gewebt sind.

3. Befestigungsvorrichtung gemäss Anspruch 2, dadurch gekennzeichnet, dass die Drähte einzelgewebt sind.

4. Befestigungsvorrichtung gemäss Anspruch 2, dadurch gekennzeichnet, dass die Drähte doppelgewebt sind.

5. Befestigungsvorrichtung nach einem der Ansprüche 2 bis 4 dadurch gekennzeichnet, dass in das Drahtgeflecht wenigstens ein Draht mit aufgerauhter Oberfläche eingewebt ist.

6. Befestigungsvorrichtung nach einem der Ansprüche 1 bis 5 dadurch gekennzeichnet, dass beide Enden der Drähte mit Kappen, insbesondere mit U-förmigen Befestigungsringen verpresst sind.

7. Befestigungsvorrichtung nach einem der Ansprüche 1 bis 5 dadurch gekennzeichnet, dass beide Enden der Drähte in einer Polymer-Masse eingebettet sind.

8. Befestigungsvorrichtung nach einem der Ansprüche 1 bis 5, dadurch gekennzeichnet, dass die Drähte beschichtet sind.

9. Befestigungsvorrichtung nach einem der Ansprüche 1 bis 8, dadurch gekennzeichnet, dass die Drähte sich auf der einen Seite an einer Aussparung eines sich an den Schraubenkopf anlehnenden Ringes, und auf der anderen Seite auf einer Aussparung der Ringmutter abstützen.

FIG.1

FIG. 2

# EUROPÄISCHER RECHERCHENBERICHT

**Europäisches Patentamt**

| | EINSCHLÄGIGE DOKUMENTE | | EP 83630166.3 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US - A - 2 950 602 (J.C. LANG) <br><br> * Zeichnungsfiguren; Anspruch 1 * <br><br> -- | 1 | F 16 B 2/04 <br> F 16 B 13/12 <br> E 21 D 20/00 <br> E 21 D 21/00 |
| X | DE - A - 2 046 341 (BRÜCKL-TECHNIK) <br><br> * Seiten 7-10; Zeichnungsfiguren 1,2 * <br><br> -- | 1,6,7, 9 | |
| A | EP - A1 - 0 053 596 (LILJEDAHL, GUNNAR) <br><br> * Zusammenfassung; Ansprüche * <br><br> -- | 1 | |
| A | DE - B2 - 2 135 863 (GERHARD, ANTON) <br><br> * Anspruch; Zeichnungsfigur 1 * <br><br> -- | 1 | |
| A | AT - B - 363 039 (POLENSKY & ZÖLL-NER) <br><br> * Seiten 3,4; Zeichnungsfiguren* <br><br> -- | 1 | **RECHERCHIERTE SACHGEBIETE (Int. Cl. ³)** <br><br> F 16 B <br> E 21 D |
| A | AT - B - 358 482 (DYCKERHOFF & WID-MANN AKTIENGESELLSCHAFT) <br><br> * Zeichnungsfiguren; Seite 2, Zeile 42 - Seite 3, Zeile 24 * <br><br> ---- | 1 | |

Der vorliegende Recherchenbericht wurde für alle Patentansprüche erstellt.

| Recherchenort | Abschlußdatum der Recherche | Prüfer |
|---|---|---|
| WIEN | 27-12-1983 | HOFBAUER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82